# EUROPEAN PATENT APPLICATION

(11) **EP 1 271 522 A1**
(43) Date of publication of application: **02.01.2003**
(21) Application number: 01250238.1
(22) Date of filing: 23.06.2001
(51) Int. Cl.: G11B 27/10, G11B 27/034, G11B 27/34, G11B 20/10, G11B 27/30

(54) **A method for controlling the editing of DVD stream recorded data and editing management system**

(71) Applicant: DEUTSCHE THOMSON-BRANDT GMBH, 78048 Villingen-Schwenningen (DE)
(72) Inventor: Li, Hui, Dr., 30419 Hannover (DE); Adolph, Dirk, 30952 Ronnenberg (DE); Klausberger, Wolfgang, 30880 Laatzen (DE); Ostermann, Ralf, 30167 Hannover (DE)
(74) Representative: Hartnack, Wolfgang, Dipl.-Ing.

(57) **Abstract**

The invention relates to a method and apparatus for controlling the editing of DVD stream recorded data. The method of the invention relies on setting feature protection labels in the navigation data in order to prevent an unintended erasure of user defined program chains when the original program chain is edited.

## Description

The invention relates to a method and to an apparatus for controlling the editing of DVD stream recorded data.

### Background

DVD is an increasingly popular medium for recording of all kinds of data, in particular video, audio and text data. The main application of DVD is in the area of consumer electronics, in particular for interactive recording and playback of video and audio data.

From US-A-6 215 746 an information playback method and apparatus for DVD is known. The information recording medium contains a data structure with high expandability of function. The method relies on the usage of a play list and play list search pointer tables. Each play list search pointer contains information indicating the type of a play list, program chain number information corresponding to the play list and information indicating the date of creation of the play list, information of primary text associated with the play list and other information.

### Invention

A problem to be solved by the invention is to provide an improved method for controlling the editing of DVD stream recorded data and an improved editing management system for DVD stream recorded data.

This problem is solved by the method disclosed in claim 1. An apparatus that utilises this method is disclosed in claim 9.

The invention is advantageous in that it allows introducing labels into navigation data for feature label protection of user defined program chains. Before an original program chain is edited the navigation data is automatically checked for the label. If the label is present a user can be prompted in order to input directions on how to make a corresponding change in the user program chain and/or associated stream cell information.

In a preferred embodiment of the invention the user is only prompted if the label indicates a certain level of importance.

In a preferred embodiment of the invention the label indicates a low, medium or high importance. Only if high importance is indicated by the label the user is prompted; if the importance is below "high", the user defined play list is modified automatically in accordance with a pre-programmed procedure depending on the editing of the original program list.

The invention is advantageous in that it avoids the unexpected erasure within the user defined program chain when the original program chain is edited by using an editing management system for DVD stream recording. This can also be the basis to realise interactive or trick editing for DVD stream recording.

In principle, the inventive method is suited for for controlling the editing of DVD stream recorded data, the method including the steps of:
- creating and/or editing a user defined program chain;
- inserting a label into the navigation data at a position corresponding to the created and/or edited user defined program chain.

The inventive editing management system uses above method for controlling the editing of DVD stream recorded data. Advantageous additional embodiments of the invention are disclosed in the respective dependent claims.

### Drawing

Exemplary embodiments of the invention are described with reference to the accompanying drawing, which shows in:

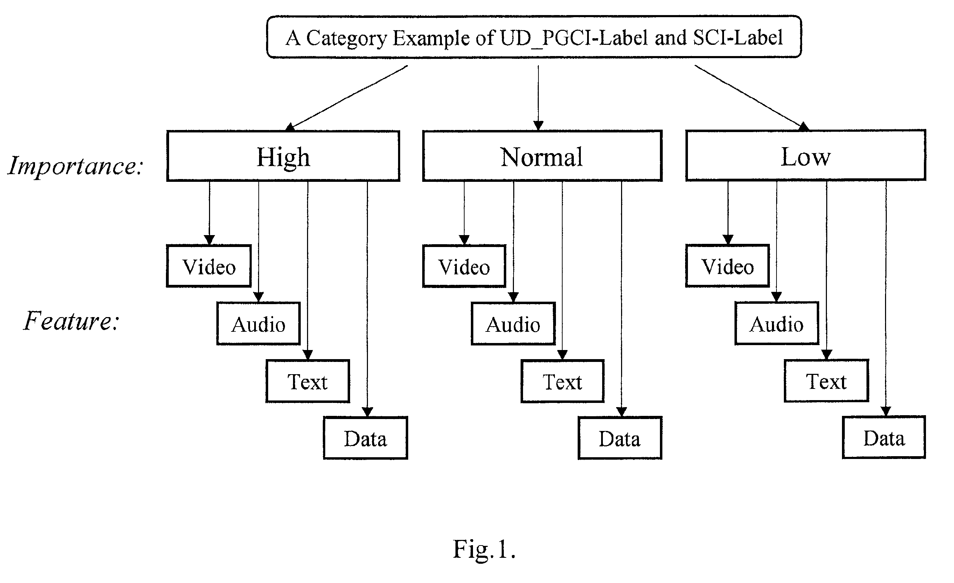

- Fig. 1: diagram illustrating the categories of a label in the navigation data in accordance with the invention.

The following glossary of terms reflects the terminology as defined in the DVD specifications for DVD-RAM / DVD-RW / DVD-R for general discs as released by the DVD forum; copies of this specification can be obtained from licensing operations group, strategic partnership and licensing division, digital media equipment and services companies, Toshiba corporation.

### Application packet (AP_PKT)

AP_PKT denotes the pieces of bitstream coming from the Application Device upon recording or going to the Application Device upon playback, as they are contained in the transport multiplex. During one recording, the size of the AP_PKTs is constant.

### Cell (C)

Denotes a data structure to represent a portion of a program. A cell in the original PGC is called "original cell" and a cell in a user defined PGC is called "user defined cell". Every program in the program set shall consist of at least one original cell. Every part of program in every play list shall consist of at least one user defined cell. In this Glossary, only "stream cell" (SC) is defined. Each stream cell refers to a part of a recorded bitstream. In the following, when "cell" is used without any further specifiers, "stream cell" shall always be the meaning.

### Entry point (EP)

Denotes a position to enter within a program in case of original PGC and a position to enter within a part of program in case of user defined PGC. Each PGC may have its own set of entry points, respectively. Entry points are stored as part of the cell information. Entry points are used during playback for skipping a part of recorded content.

### Navigation data

Denotes those data that are provided to control recording, playing back, and editing bitstreams (SOBs). Navigation data corresponds to "real time recording stream manager"
(RTR_SMG).

### Original cell: see Cell (c)

Denotes a cell that belongs to the original PGC.

### Original PGC (ORG_PGC): see program chain (PGC)

Denotes the navigation data, which describes the program set. ORG_PGC is a chain of programs, and includes stream data stored in the .SRO file.

### Play list (PL)

Denotes a list of part of programs that allows the user to define any playback sequences. A play list contains a user defined PGC.

### Program chain (PGC)

Denotes a generic, conceptual unit. In case of the original PGC, PGC represents a chain of programs which corresponds to the program set, and in case of user defined PGC, it represents a chain of part of programs which corresponds to a play list. The total playback of a PGC is equivalent to a sequence of cell playbacks according to the definitions in the program chain information (PGCI).

### Program chain information (PGCI)

Denotes a data structure to represent the total playback of a PGC. PGCI is used for both the original PGC and the user defined PGC. User defined PGCs consist of only PGCI, the cells of which refer to SOBs in the original PGC.

### User defined cell: see cell (c)

Denotes a cell which belongs to a user defined PGC, and corresponds to a part of program.

### User defined PGC (UD_PGC): see program chain (PGC)

Denotes a chain of part of programs. However, it contains only navigations data, and each part of program refers to stream data belonging to the original PGC. Therefore, creating or deleting a user defined PGC does not affect the original PGC at all.

### Exemplary embodiments

The DVD stream recording standard provides a feature for creating user defined program chains. A UD_PGC is a virtual play list defined during a user directed editing process.

A UD_PGC contains pointers to data points of the original program chain which has been created during a previous recording. During an editing process the user is allowed to delete all or parts of the underlying original program chain (ORG_PGC). The present invention allows eliminating unexpected or unintended side effects on the UD_PGCs when the original ORG_PGC is edited.

This is accomplished by avoiding the unexpected erasure of all or parts of a complete UD_PGC by using an editing management system for DVD stream recording. Protection labels such as protection bytes are set in the navigation data, which act as feature and category message label for the UD_PGC. Furthermore such labels are utilised by the editing management system to realise interactive and trick editing for DVD stream recording.

In order to avoid unexpected erasure of a UD_PGC during an editing operation for DVD stream recording the feature label protection bytes are set in the navigation data. These labels act as indicators of feature and category and messages for UD_PGC and are utilised by the editing management system to realise interactive and/or trick editing for DVD stream recording.

The feature label for a UD_PGCI should be generated and/or edited not only while creating a new UD_PGCI but also after a UD_ PGCI has been created.

In order to treat each SCI in an UD_PGCI individually, it is advantageous not only to set feature labels for each UD_PGCI but also to set feature flags to each SCI in an UD_PGCI.

Based on the above referenced DVD specification (Version 0.9 of "DVD specifications for rewritable / re-recordable discs, part 5, stream recording, May 2000") it is possible to arrange UD_PGCI-labels and SCI-labels in the navigation data structure:
UD_PGCI-label:
   a) It is possible to make use of the reserved bytes in play list search pointer (PL_SRP), such as RBP 0 (reserved 1 bytes) or RBP 1 (PL_TY, b0∼b3) (see 4.1.2.2 of the above reference specification).
   b) It is also possible to arrange UD_PGCI-label in program chain general information (PGC_GI) reserved bytes (RBP0), see 4.5.1 of the above reference specification.
   c) It is possible to set UD_PGCI -label in item text (IT_TXT), see 4.6.3 of the above reference specification.
   d) It is possible to arrange special UD_PGCI -label bytes.
SCI-label:
   a) It is possible to arrange SCI-label in the reserved bytes (RBP0) of SCI general information (SCI_GI) (4.5.4.1 of the above reference specification).
   b) It is possible to set SCI-label in item text (IT_TXT) (4.6.3 of the above reference specification).
   c) It is possible to arrange special SCI-label bytes.

The labelling of the navigation data allows protecting the UD_PGCIs against unintended erasure and/or editing. When an attempt is made to edit the ORG_PGCI, the corresponding UD_PGCI is only edited after a user inquiry.

Further the user interaction can be made dependent on a label category.

According to the intended application, different category strategies may be defined for UD_PGCI-label and SCI-label. The following is an example as illustrated in Fig. 1.
UD_PGCI-label and SCI-label are categorised according to the respective importance by forming the three categories: high importance, normal importance and low importance. Each category may have its own subcategory. For example, the first level category "high importance" can be further categorised according to the features: video data, audio data, text data and so on as well as the other categories of importance as shown in Fig. 1.

The label category can be utilised to prompt the user. For example, the user is only prompted if the label indicates high importance. If the label indicates medium or low importance the UD_PGCI and it's included stream cell information are edited automatically by default action, which is pre-programmed by a default strategy defined by the software designer. This means that in these cases the associated UD_PGCI is edited without any user inquiry.

Within the DVD stream recording editing management the above label categories may be utilised to realise intelligent trick editing. In the following an example is given:

During the editing of an ORG_PGC, ie. deleting or shortening stream objects, it is possible that the whole or only a part of the ORG_PGC related stream objects is also used by a UD_PGCI. The DVD stream recording editing management will act on this editing task according to the labels. If the UD_PGCI-label indicates low importance, the UD_PGCI may automatically be changed or deleted without any notice; if the UD_PGCI-label indicates high importance, the editing of ORG_PGC will be adapted in such a way, that the UD_PGCI is not affected; if the UD_PGCI-label indicates normal importance, the UD_ PGCI will be processed according to its subcategory or inquire the user for a final action. The SCI-label has the same function as the UD_PGCI-label. The SCI-label makes it possible to realise details category editing.

Based on different category strategies, different editing management tricks can be developed for practical application. The UD_PGCI-label and SCI-label provide the possibility to develop user friendly, application oriented and interactive management strategies for stream editing.

The invention is applicable to all kinds of electronic recording media supporting the generation of individual playing lists, for instance in connection with DVD Forum or DVR standardisation, Content Referencing, Content Location, Personal Video Recorder, Personal Digital Recorder, optical storage, CD-R, CD-RW, DVD, DVD-RAM, DVD+RW, DVD-RW, DVD-R, DVR, hard disk storage, Home Server and Web-enabled storage.

## Claims

1. Method for controlling the editing of DVD stream recorded data, the method including the steps of:
- creating and/or editing a user defined program chain (UD_PGC) ;
- inserting a label into the navigation data at a position corresponding to the created and/or edited user defined program chain.

2. Method according to claim 1, wherein said label includes data indicating an importance of the labelled program chain to a user.

3. Method according to claim 2, wherein said importance is chosen from the group consisting of: high, medium, low.

4. Method according to one of claims 1 to 3, wherein said label includes data indicative of at least one of the following feature categories: video data, audio data, text data and other data.

5. Method according to one of claims 1 to 4, wherein said label is associated with stream cell information (SCI) of the user defined program chain.

6. Method according to one of claims 1 to 5, further including the step of checking the navigation data for said label prior to editing an original program chain (ORG_PGC).

7. Method according to one of claims 1 to 6, further including the step of prompting a user in response to the detection of said label and modifying the user defined program chain and/or the stream cell information in accordance with a user input action.

8. Method according to claim 7, wherein the user is prompted only if the importance as indicated by said label is high or medium.

9. Editing management system for controlling the editing of DVD stream recorded data, including means adapted for carrying out a method in accordance with anyone of the claims 1 to 8.
